# EUROPEAN PATENT SPECIFICATION

(11) **EP 3 560 979 B1**
(45) Date of publication and mention of the grant of the patent: **23.06.2021**
(21) Application number: 19163347.8
(22) Date of filing: 18.03.2019
(51) Int. Cl.: C08G 59/42, C08G 59/50, C08G 59/68, C08K 3/00, C08K 5/00, C08L 63/00

(54) **CURING AGENT COMPOSITIONS FOR THERMOSETTING EPOXY RESIN COMPOSITIONS**
HÄRTERZUSAMMENSETZUNGEN FÜR WÄRMEHÄRTENDE EPOXIDHARZZUSAMMENSETZUNGEN
COMPOSITIONS D'AGENT DE DURCISSEMENT POUR COMPOSITIONS DE RÉSINE ÉPOXY THERMODURCISSABLE

(30) Priority: 26.04.2018 EP 18169559; 04.01.2019 US 201916239778
(43) Date of publication of application: 30.10.2019
(73) Proprietor: SHPP Global Technologies B.V., 4612 PX Bergen op Zoom (NL)
(72) Inventor: Agrawal, Mukesh, 562125 Bangalore, Karnataka (IN); Verghese, Nikhil K. E., Sugar Land, TX 77478 (US)
(74) Representative: Modiano, Micaela Nadia

(56) References cited:
- WO-A1-2009/129088
- WO-A1-2016/014536
- US-A- 3 914 512
- US-A- 3 989 573
- US-A1- 2002 128 353
- US-A1- 2014 005 344
- US-A1- 2016 075 872

## Description

### BACKGROUND

Thermoset polymers are used in a wide variety of consumer and industrial products including protective coatings, adhesives, electronic laminates (such as those used in the fabrication of printed circuit boards), flooring and paving, glass fiber-reinforced pipes, and automotive parts (such as leaf springs, pumps, and electrical components). Thermoset epoxies are derived from thermosetting epoxy resins that are polymerized in the presence of a co-reactive curing agent (also referred to in the art as a hardener), a catalytic curing agent (also referred to in the art as a cure accelerator or catalyst), or both, to afford a cured thermoset epoxy.

Anhydride curing agents can be used to provide higher heat properties, better electrical properties, longer pot life, and lower shrinkage to cured epoxies. However, anhydride curing agents can release undesirable amounts of heat during curing that can lead to shrinkage, and have long curing times. These anhydride curing agents further provide epoxy thermosets that can lack dimensional stability at high temperatures.

US 3989573 discloses a laminate comprising a plurality of bonded layers of sheet material impregnated with a cured resinous composition, comprising a cured dispersion of an epoxy resin, NADIC methyl anhydride and benzophenonetetracarboxylic dianhydride. US 2014/005344A1 discloses a hardener system for epoxy resins comprising i) at least one aromatic dianhydride compound A having a melting point of at least 35° C, ii) at least one monoanhydride compound B having a melting point of not more than 30° C and iii) at least one catalyst C, wherein the aromatic dianhydride compound A is dispersed in the hardener system. WO 2009/129088 discloses a process of forming a solid epoxy-imidazole catalyst, the process including: contacting an imidazole, an amine, and one or more epoxy resins, in the absence of added solvent, to form a solid epoxy-imidazole catalyst. US 3914512 discloses a stable diaryl dianhydride-epoxy resin solution for preparing handleable, formable resin-impregnated reinforcing material and fully cured laminates. WO 2016/014536 discloses high purity epoxide compounds, methods for preparing the high purity epoxide compounds, and compositions derived from the epoxide compounds and materials and articles derived from the epoxide compounds. US 2016/075872A1 discloses grafted triglycerides prepared from an epoxidized triglyceride and an acid anhydride containing 4 to 40 carbon atoms reacted with an epoxy resin and an anhydride curing agent to yield an epoxy thermoset. US 2002/128353A1 discloses underfill compositions useful for fluxing metal surfaces in preparation for providing an electrical connection and sealing the space between semiconductor devices, underfill composition which begins to cure at about the same temperature that solder used to establish the electrical interconnection melts.

Accordingly, there remains a need in the art for curing agents that can provide thermoset epoxies for high heat applications.

### BRIEF SUMMARY

Provided is a curable epoxy composition including an epoxy resin composition; a hardener composition comprising an aromatic dianhydride curing agent of the formula 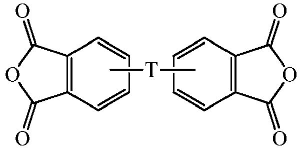 wherein T is -O-, -S-, -SO₂-, -SO-, -C_{y}H_{2y}- wherein y is an integer from 1 to 5 or a halogenated derivative thereof, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination thereof, and the aromatic dianhydride has a melting point of 220°C or less; and at least one additional anhydride curing agent different from the aromatic dianhydride curing agent; and 0.1 to 5 weight percent (wt%) of a heterocyclic accelerator, based on the total weight of the epoxy resin composition and the hardener composition, wherein the heterocyclic accelerator comprises a substituted or unsubstituted C₃₋₆ heterocycle comprising 1 to 4 ring heteroatoms, wherein each heteroatom is nitrogen, oxygen, phosphorus, silicon, or sulfur, preferably nitrogen, oxygen, or sulfur, more preferably nitrogen.

Provided is a method for the manufacture of the curable epoxy composition comprising combining the epoxy resin composition and the hardener composition at a temperature of 100 to 200°C, preferably 120 to 190°C, more preferably 130 to 180°C to provide a reaction mixture; cooling the reaction mixture to less than 100°C; and adding the heterocyclic accelerator to the reaction mixture, to provide the curable epoxy composition.

Also provided are a thermoset epoxy composition comprising the cured product of the curable epoxy composition, and an article comprising the thermoset epoxy composition.

Further provided is a method for the manufacture of a thermoset epoxy composition comprising curing the curable epoxy composition; preferably curing the curable epoxy composition by compression molding, injection molding, transfer molding, pultrusion, resin casting, or a combination thereof.

The above described and other features are exemplified by the following figures, detailed description, and examples.

### BRIEF DESCRIPTION OF THE DRAWINGS

The following is a brief description of the drawings and are exemplary of one or more aspects described herein.

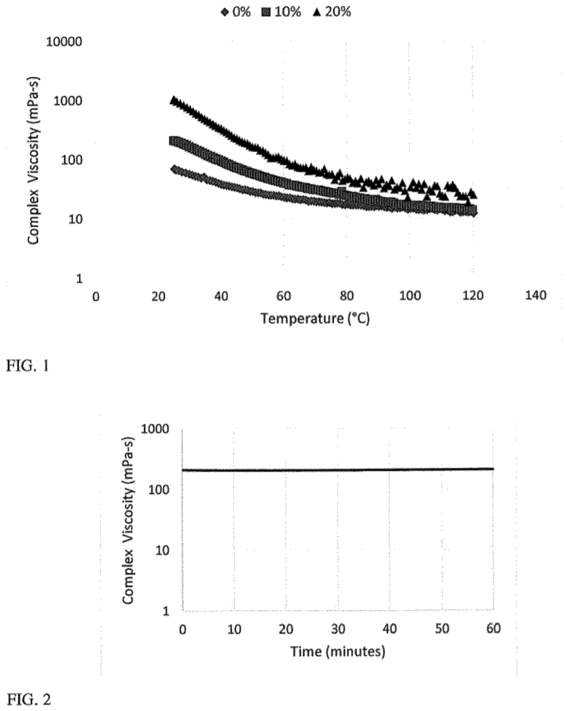

FIG. 1 is a graph of dynamic viscosity (milliPascal-second, mPa·s) versus temperature (°C).
FIG. 2 is a graph of dynamic viscosity (mPa·s) versus time (minutes).

### DETAILED DESCRIPTION

Increasing the crosslinking density can increase glass transition temperature (T_{g}) and improve high temperature properties of thermoset epoxies. Higher crosslinking densities can be achieved by functionalizing epoxy resins and/or curing agents with substituents amenable to crosslinking. Organic acid dianhydrides that contain cyclic or aromatic structures can have high functionality suitable for crosslinking density, but often have melting temperatures greater than 220°C, making homogeneous mixing of epoxy resins difficult to achieve without resorting to higher temperatures.

The inventors have discovered that a hardener composition including an aromatic dianhydride curing agent having a melting temperature of 220°C or less, for example bisphenol-A dianhydride (BPA-DA), and at least one additional anhydride curing agent different from the aromatic dianhydride provides a cured epoxy resin having superior high heat resistance properties, such as a T_{g} of 170°C or greater and a CTE of less than 170 ppm/K at temperatures higher than the T_{g}. When the additional anhydride is a liquid, or a solvent is added to the hardener composition, a curable epoxy composition can be obtained as a homogenous clear mixture without the use of higher temperature mixing.

The curable epoxy composition includes an epoxy resin composition comprising one or more epoxy resins, each independently having an epoxy equivalent weight of at least 2; and a hardener composition comprising an aromatic dianhydride curing agent having a melting point of 220°C or less, and at least one additional anhydride curing agent different from the aromatic dianhydride. The curable epoxy composition also includes 0.1 to 5 weight percent (wt%) of a heterocyclic accelerator comprising a substituted or unsubstituted C₃₋₆ heterocycle comprising 1 to 4 ring heteroatoms, wherein each heteroatom is independently the same or different, and is nitrogen, oxygen, phosphorus, silicon, or sulfur. For example, each heteroatom of the heterocyclic accelerator is independently the same or different, and is nitrogen, oxygen, or sulfur. In a specific aspect, the heteroatom of the heterocyclic accelerator is nitrogen.

The anhydride to epoxy (A/E) ratio can be 0.1:1 to 2.0:1, preferably 0.4:1 to 1.2:1, more preferably 0.6:1 to 1:1. As used herein, the A/E ratio is the molar ratio of anhydride functionalities to epoxy functionalities in the curable epoxy composition.

The epoxy resin composition can be a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or a combination thereof. In an aspect, the epoxy resin is bisphenol-A diglycidyl ether (BPA-DGE).

The aromatic dianhydride can be of the formula (1) 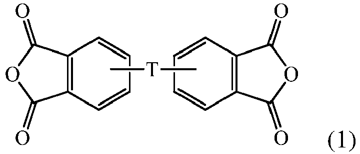 wherein T is -O-, -S-, -SO₂-, -SO-, -C_{y}H_{2y}- wherein y is an integer from 1 to 5 or a halogenated derivative thereof, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination thereof. For example, R¹ can be a monovalent C₁₋₁₃ organic group. For example, T can be -O- or a group of the formula -O-Z-O- wherein the divalent bonds of the -O- or the -O-Z-O- group are in the 3,3', 3,4', 4,3', or the 4,4' positions. When T is -O-Z-O-, Z can be derived from bisphenol A (i.e., Z is 2,2-(4-phenylene)isopropylidene).

Exemplary groups Z include groups of formula (2) 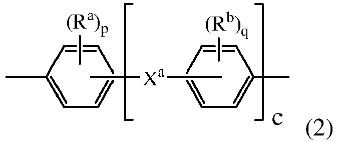 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of the formula (3a) or (3b) 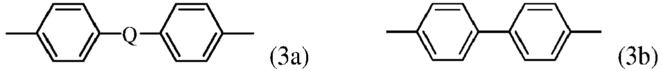 wherein Q is -O-, -S-, -C(O)-, -SO₂-, -SO-, -P(R^{c})(=O)- wherein R^{c} is a C₁₋₈ alkyl or C₆₋₁₂ aryl, or -C_{y}H_{2y}- wherein y is an integer from 1 to 5 or a halogenated derivative thereof (including a perfluoroalkylene group). For example, Q can be 2,2-isopropylidene.

Exemplary aromatic dianhydrides include 4,4'-(4,4'-isopropylidenediphenoxy)bis(phthalic anhydride) (bisphenol A dianhydride, BPA-DA), 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; 4-(2,3-dicarboxyphenoxy)-4'-(3,4-dicarboxyphenoxy)diphenyl sulfone dianhydride, or a combination thereof, provided that the aromatic dianhydride has a melting point of 220°C or less.

The curable epoxy composition can include 50 to 150, preferably 60 to 140, more preferably 80 to 120 parts by weight of the aromatic dianhydride curing agent.

The hardener composition can include 1 to 99 wt%, preferably 10 to 80 wt% of the dianhydride curing agent based on the total weight of the hardener composition.

The hardener composition further includes at least one additional anhydride curing agent that is different than the aromatic dianhydride curing agent. For example, the additional anhydride curing agent can be benzophenone tetracarboxylic anhydride, (C₁₋₆ alkyl)styrene-maleic anhydride copolymer, chlorendic anhydride, dodecenyl succinic anhydride, hexahydrophthalic anhydride, hexahydro-4-methylphthalic anhydride, maleic anhydride, methylbutenyl tetrahydrophthalic anhydride, tetrahydro-4-methylphthalic anhydride, methylcyclohexene dicarboxylic anhydride, methylnadic anhydride, methyltetrahydrophthalic anhydride, nadic anhydride, phthalic anhydride, pyromellitic anhydride, succinic anhydride, trimellitic anhydride, or a combination thereof.

The molar ratio of the aromatic dianhydride curing agent to the additional anhydride curing agent(s) can be, for example, 10:1 to 1:5, preferably 9:1 to 1:4, more preferably 5:1 to 1:4 or 4:1 to 1:4.

The heterocyclic accelerator can be a substituted or unsubstituted C₃₋₆ heterocycle comprising 1 to 4 ring heteroatoms, wherein each heteroatom is independently the same or different, and is nitrogen, oxygen, phosphorus, silicon, or sulfur. For example, each heteroatom is independently the same or different, and is nitrogen, oxygen, or sulfur. In another example, the heteroatoms are each nitrogen.

Exemplary heterocyclic accelerators include benzotriazoles; triazines; piperazines such as aminoethylpiperazine, N-(3-aminopropyl)piperazine, or the like; imidazoles such as 1-methylimidazole, 2-methylimidazole, 3-methyl imidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole; cyclic amidine such as 4-diazabicyclo(2,2,2)octane, diazabicycloundecene, 2-phenyl imidazoline, or the like; N,N-dimethylaminopyridine; a sulfamidate; or a combination thereof.

The curable epoxy composition can include 0.1 to 5, preferably 0.2 to 3, more preferably 0.5 to 2, even more preferably 0.6 to 1.2 wt% of the heterocyclic accelerator, based on the total weight of the epoxy resin composition and the hardener composition. In another aspect, the curable epoxy composition can include 0.1 to 5, or 0.2 to 3, or 0.5 to 2, or 0.6 to 1.2 wt% of the heterocyclic accelerator, based on the total parts by weight of the epoxy resin composition and the aromatic dianhydride curing agent.

The curable epoxy composition can include an additive composition. The additive composition can include a particulate filler, a fibrous filler, a reinforcing material, an antioxidant, a heat stabilizer, a light stabilizer, a ultraviolet light stabilizer, a ultraviolet light-absorbing compound, a near infrared light-absorbing compound, an infrared light-absorbing compound, a plasticizer, a lubricant, a release agent, a antistatic agent, an anti-fog agent, an antimicrobial agent, a colorant, a surface effect additive, a radiation stabilizer, a flame retardant, flame retardant synergists such as antimony pentoxide, an anti-drip agent, a fragrance, an adhesion promoter, a flow enhancer, a coating additive, a polymer different from the thermoset polymer, or a combination thereof. For example, the additive composition includes one or more of a flame retardant, a particulate filler, a fibrous filler, an adhesion promoter, a flow enhancer, a coating additive, a colorant, or a combination thereof.

Fillers can include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as TiO₂, aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings to facilitate compatibility with a polymer matrix, or the like; single crystal fibers or "whiskers" such as silicon carbide, alumina, boron carbide, iron, nickel, copper, or the like; fibers (including continuous and chopped fibers) such as asbestos, carbon fibers, glass fibers, such as E, A, C, ECR, R, S, D, or NE glasses, or the like; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising aluminum silicates, aluminum oxides, magnesium oxides, and/or calcium sulfate hemihydrate; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic polymers, poly(vinyl alcohol), or the like; or fillers and reinforcing agents such as mica, clay, feldspar, flue dust, fillite, quartz, quartzite, perlite, tripoli, diatomaceous earth, carbon black, or the like, or a combination thereof.

The fillers can be coated with a layer of metallic material to facilitate conductivity, or surface treated with silanes to improve adhesion and dispersion with a polymer matrix. In addition, reinforcing fillers can be provided in the form of monofilament or multifilament fibers and can be used individually or in combination with other types of fiber, through, for example, co-weaving or core/sheath, side-by-side, orange-type or matrix and fibril constructions, or by other methods of fiber manufacture. Co-woven structures include glass fiber-carbon fiber, carbon fiber-aromatic polyimide (aramid) fiber, aromatic polyimide fiberglass fiber, or the like. Fibrous fillers can be supplied in the form of, for example, rovings, woven fibrous reinforcements, such as 0-90 degree fabrics or the like; non-woven fibrous reinforcements such as continuous strand mat, chopped strand mat, tissues, papers, felts, or the like; or three-dimensional reinforcements such as braids.

Flame retardants include organic compounds that comprise phosphorus, bromine, or chlorine. Non-brominated and non-chlorinated phosphorus-containing flame retardants can be preferred in certain applications for regulatory reasons, for example organic phosphates and organic compounds containing phosphorus-nitrogen bonds.

Flame retardant aromatic phosphates include triphenyl phosphate, tricresyl phosphate, isopropylated triphenyl phosphate, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, and 2-ethylhexyl diphenyl phosphate. Di- or polyfunctional aromatic phosphorus-containing compounds are also useful, for example resorcinol tetraphenyl diphosphate (RDP), the bis(diphenyl) phosphate of hydroquinone and the bis(diphenyl) phosphate of bisphenol A, respectively, and their oligomeric and polymeric counterparts. Flame retardant compounds containing phosphorus-nitrogen bonds include phosphonitrilic chloride, phosphorus ester amides, phosphoric acid amides, phosphonic acid amides, phosphinic acid amides, and tris(aziridinyl) phosphine oxide. Phosphorus-containing flame retardants can be included at 0.1 to 30 parts by weight, or 1 to 20 parts by weight, based on 100 parts by weight of the composition, excluding any filler.

Halogenated materials can also be used as flame retardants, for example bisphenols such as 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, as well as oligomeric and polymeric halogenated aromatic compounds, such as a copolycarbonate of bisphenol A and tetrabromobisphenol A and a carbonate precursor, e.g., phosgene. Metal synergists, e.g., antimony oxide, can also be used with the flame retardant. Halogen containing flame retardants can be used in amounts of 1 to 25 parts by weight, or 2 to 20 parts by weight, based on 100 parts by weight of the composition, excluding any filler.

Inorganic flame retardants can also be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, or Na₃AlF₆. When present, inorganic flame retardant salts are present in amounts of 0.01 to 10 parts by weight, more specifically 0.02 to 1 parts by weight, based on 100 parts by weight of the total composition, excluding any filler.

Adhesion promoters include chromium complexes, silanes, titanates, zircon-aluminates, propylene maleic anhydride copolymers, reactive cellulose esters, or the like.

Colorants such as pigment or dye additives can also be present. Pigments include inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or a thereof.

Dyes include coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene; triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3'''',5'''-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or a combination thereof.

The curable epoxy composition can further include an additional cure accelerator different from the heterocyclic cure accelerator. The additional cure accelerator can be an amine accelerator, such as isophoronediamine, triethylenetetraamine, diethylenetriamine, 1,2- and 1,3-diaminopropane, 2,2-dimethylpropylenediamine, 1,4-diaminobutane, 1,6-diaminohexane, 1,7-diaminoheptane, 1,8-diaminooctane, 1,9-diaminononane, 1,12-diaminododecane, 4-azaheptamethylenediamine, N,N'-bis(3-aminopropyl)butane-1,4-diamine, dicyanamide, diamide diphenylmethane, diamide diphenylsulfonic acid (amine adduct), 4,4'-methylenedianiline, diethyltoluenediamine, m-phenylenediamine, p-phenylenediamine, melamine formaldehyde resins, urea formaldehyde resins, tetraethylenepentamine, 3-diethylaminopropylamine, 3,3'-iminobispropylamine, 2,4-bis(p-aminobenzyl)aniline, tetraethylenepentamine, 3-diethylaminopropylamine, 2,2,4- and 2,4,4-trimethylhexamethylenediamine, 1,2- and 1,3-diaminocyclohexane, 1,4-diamino-3,6-diethylcyclohexane, 1,2-diamino-4-ethylcyclohexane, 1,4-diamino-3,6-diethylcyclohexane, 1-cyclohexyl-3,4-diminocyclohexane, 4,4'-diaminondicyclohexylmethane, 4,4'-diaminodicyclohexylpropane, 2,2-bis(4-aminocyclohexyl)propane, 3,3'-dimethyl-4,4'-diaminodicyclohexylmethane, 3-amino-1-cyclohexaneaminopropane, 1,3- and 1,4-bis(aminomethyl)cyclohexane, m- and p-xylylenediamine, or diethyl toluene diamines; or a tertiary amine hardening accelerator such as triethylamine, tributylamine, dimethylaniline, diethylaniline, benzyldimethylamine (BDMA), α-methylbenzyldimethylamine, *N,N*-dimethylaminoethanol, *N,N*-dimethylaminocresol, or tri(*N,N-*dimethylaminomethyl)phenol; or a combination thereof.

The additional cure accelerator can be a phenolic hardener, such as novolac type phenol resins, resole type phenol resins, aralkyl type phenol resins, dicyclopentadiene type phenol resins, terpene modified phenol resins, biphenyl type phenol resins, bisphenols, triphenylmethane type phenol resins, or a combination thereof.

The additional cure accelerator can be a latent cationic cure catalyst including diaryliodonium salts, phosphonic acid esters, sulfonic acid esters, carboxylic acid esters, phosphonic ylides, triarylsulfonium salts, benzylsulfonium salts, aryldiazonium salts, benzylpyridinium salts, benzylammonium salts, isoxazolium salts, or a combination thereof. The diaryliodonium salt can have the structure [(R¹⁰)(R¹¹)I]⁺ X⁻, wherein R¹⁰ and R¹¹ are each independently a C₆₋₁₄ monovalent aromatic hydrocarbon radical, optionally substituted with from 1 to 4 monovalent radicals selected from C₁₋₂₀ alkyl, C₁₋₂₀ alkoxy, nitro, and chloro; and wherein X⁻ is an anion. The additional cure accelerator can have the structure [(R¹⁰)(R¹¹)I]⁺ SbF₆⁻, wherein R¹⁰ and R¹¹ are each independently a C₆₋₁₄ monovalent aromatic hydrocarbon, optionally substituted with from 1 to 4 C₁₋₂₀ alkyl, C₁₋₂₀ alkoxy, nitro, or chloro; for example, 4-octyloxyphenyl phenyl iodonium hexafluoroantimonate.

The additional cure accelerator can be a metal salt complex, such as a copper (II) or aluminum (III) salt of an aliphatic or aromatic carboxylic acid selected from copper (II), tin (II), and aluminum (III) salts of acetate, stearate, gluconate, citrate, benzoate, and mixtures thereof. The additional cure accelerator can be a copper (II) or aluminum (III) β-diketonate selected from copper (II) and aluminum (III) salts of acetylacetonate. The additional cure accelerator can be a boron trifluoride-trialkylamine complex.

The curable epoxy composition can further include a poly(phenylene ether) copolymer. The poly(phenylene ether) copolymer can be a reactive component in the curable epoxy composition because it is bifunctional, with two reactive phenolic groups. For example, the curable epoxy composition can further comprise 1 to 100 parts by weight of the poly(phenylene ether) copolymer.

The curable epoxy composition can be manufactured by combining the epoxy resin composition and the hardener composition together at a temperature of 100 to 200°C, preferably 120 to 190°C, more preferably 130 to 180°C to provide a reaction mixture. The reaction mixture can subsequently be cooled, for example to less than 100°C, and the heterocyclic accelerator can be added to the reaction mixture, to provide the curable epoxy composition.

The curable epoxy composition and/or the reaction mixture can be substantially free of solvent. Alternatively, the curable epoxy composition and/or the reaction mixture further includes a solvent, for example C₃₋₈ ketones, C₄₋₈ *N,N*-dialkylamides, C₄₋₁₆ dialkyl ethers, C₆₋₁₂ aromatic hydrocarbons, C₃₋₆ alkyl alkanoates, C₂₋₆ alkyl nitriles, C₂₋₆ dialkyl sulfoxides, or a combination thereof. Examples of C₃₋₈ ketones include acetone, methyl ethyl ketone, and methyl isobutyl ketone. Examples of C₄₋₈ *N,N*-dialkylamides include dimethylformamide, dimethylacetamide, and *N*-methyl-2-pyrrolidone. Examples of C₄₋₁₆ dialkyl ethers include tetrahydrofuran, dioxane, or a combination thereof, optionally with one or more ether oxygen atoms within the alkyl groups and one or more hydroxy substituents on the alkyl groups, for example the C₄₋₁₆ dialkyl ether can be ethylene glycol monomethyl ether. The aromatic hydrocarbon solvent can be an ethylenically unsaturated solvent. Examples of C₆₋₁₂ aromatic hydrocarbons include benzene, toluene, xylenes, styrene, and divinylbenzenes. Examples of C₃₋₆ alkyl alkanoates include methyl acetate, ethyl acetate, methyl propionate, and ethyl propionate. Examples of C₂₋₆ alkyl cyanides include acetonitrile, propionitrile, and butyronitrile. Examples of C₂₋₆ dialkyl sulfoxides include dimethyl sulfoxide, methyl ethyl sulfoxide, and diethyl sulfoxide. For example, the solvent can be acetone, methyl ethyl ketone, *N*-methyl-2-pyrrolidone, toluene, or a combination thereof. For example, the solvent can be a halogenated solvent such as methylene chloride, chloroform, 1,1,1-trichloroethane, chlorobenzene, or the like.

The curable epoxy composition and/or the reaction mixture can be prepared without solvent and therefore be substantially free of solvent. In some aspects, the curable epoxy composition can be substantially free of solvent. The term "substantially free of solvent" means that the curable epoxy composition and/or the reaction mixture contains less than 500 parts per million by weight (ppm) of solvent. A "solvent free" curable epoxy composition and/or reaction mixture can have greater than 0 to 450 ppm, preferably greater than 0 to 300 ppm, more preferably greater than 0 to 200 ppm, even more preferably greater than 0 to 100 ppm of solvent, based on the total weight of the curable epoxy composition and/or reaction mixture.

Also provided is a cured composition including the product obtained by curing the curable epoxy composition. The cured epoxy composition can exhibit a single glass transition temperature (T_{g}), such as a single T_{g} greater than or equal to 170°C, preferably greater than or equal to 180°C, more preferably greater than or equal to 200°C. The T_{g} can be determined using dynamic mechanical analysis (DMA) at -40 to 300°C with a temperature ramp of 3°C/min. Alternatively, T_{g} can be determined using differential scanning calorimetry (DSC) at 23 to 300°C with a heating rate of 10°C/minute or 20°C/minute.

The method for the manufacture of a thermoset epoxy composition includes curing the curable epoxy composition. There is no particular limitation on the method by which the composition may be cured. The composition may, for example, be cured thermally or by using irradiation techniques, including ultraviolet (UV) irradiation and electron beam irradiation. When heat curing is used, the temperature can be from 80 to 300°C, and preferably 120 to 240°C. The heating period can be 1 minute (min) to 10 hours (h), preferably from 1 min to 6 h, more preferably from 3 h to 5 h. The curing may be staged to produce a partially cured and often tack-free resin, then fully cured by heating for longer periods or temperatures within the aforementioned ranges.

The curable epoxy composition can be cured by compression molding, injection molding, transfer molding, pultrusion, resin casting, or a combination thereof. For example, the curable epoxy composition can be disposed in a mold, for example injected into a mold, and then cured at 150 to 250°C in the mold. The curing can be for 5 min to 24 h, preferably 30 min to 5 h, and more preferably 45 min to 1.5 h.

The resulting thermoset epoxy composition after curing can be clear and/or transparent. For example, the thermoset epoxy composition can have a total transmission of greater than 50%, preferably greater than 70%, more preferably greater than 90%.

The thermoset epoxy composition can exhibit good ductility, good fracture toughness, unnotched Izod impact strength, and good tensile elongation.

The thermoset epoxy composition can exhibit increased char formation on pyrolysis.

The thermoset epoxy composition can exhibit low moisture absorption.

The thermoset epoxy composition can exhibit decreased shrinkage upon curing.

The thermoset epoxy composition can exhibit decreased dielectric properties.

The curable epoxy composition and cured composition can be used in a variety of applications and articles, including any applications where other epoxides and thermoset polymers are used. Exemplary uses and applications include coatings such as protective coatings, sealants, weather resistant coatings, scratch resistant coatings, and electrical insulative coatings; adhesives; binders; glues; composite materials such as those using carbon fiber and fiberglass reinforcements. When utilized as a coating, the disclosed compounds and compositions can be deposited on a surface of a variety of underlying substrates. For example, the compositions can be deposited on a surface of metals, plastics, glass, fiber sizings, ceramics, stone, wood, or any combination thereof. The disclosed compositions can be used as a coating on a surface of a metal container, such as those commonly used for packaging and containment in the paint and surface covering industries. In some instances, the coated metal is aluminum or steel.

Articles that can be prepared using the curable compositions include, for example, electrical components, computer components, or automotive, aircraft, and watercraft exterior and interior components. The article can be in the form of a composite, a foam, a fiber, a layer, a coating, an encapsulant, an adhesive, a sealant, a component, a prepreg, a casing, or a combination thereof. The curable compositions can be used for the production of composite materials for use in the aerospace industry or in forming composites used for printed circuit boards. Methods of forming composites for use in printed circuit boards are known in the art and are described in, for example, U.S. Pat. No. 5,622,588 to Weber, U.S. Pat. No. 5,582,872 to Prinz, and U.S. Pat. No. 7,655,278 to Braidwood.

Additional applications include, for example, acid bath containers; neutralization tanks; aircraft components; bridge beams; bridge deckings; electrolytic cells; exhaust stacks; scrubbers; sporting equipment; stair cases; walkways; automobile exterior panels such as hoods and trunk lids; floor pans; air scoops; pipes and ducts, including heater ducts; industrial fans, fan housings, and blowers; industrial mixers; boat hulls and decks; marine terminal fenders; tiles and coatings; building panels; business machine housings; trays, including cable trays; concrete modifiers; dishwasher and refrigerator parts; electrical encapsulants; electrical panels; tanks, including electrorefining tanks, water softener tanks, fuel tanks, and various filament-wound tanks and tank linings; furniture; garage doors; gratings; protective body gear; luggage; outdoor motor vehicles; pressure tanks; printed circuit boards; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and flarings; engine narcelles; cargo doors; tennis racquets; golf club shafts; fishing rods; skis and ski poles; bicycle parts; transverse leaf springs; pumps, such as automotive smog pumps; electrical components, embedding, and tooling, such as electrical cable joints; wire windings and densely packed multi-element assemblies; sealing of electromechanical devices; battery cases; resistors; fuses and thermal cut-off devices; coatings for printed wiring boards; casting items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toner resins for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, and numerous other applications.

Methods of forming a composite can include impregnating a reinforcing structure with a curable composition; partially curing the curable composition to form a prepreg; and laminating a plurality of prepregs. The lamination can include disposing an additional layer, e.g., an electrically conductive layer or an adhesive or bond ply on a side of a prepreg before lamination.

Exemplary reinforcing structures for prepreg formation are known in the art. For example, reinforcing structures can include reinforcing fabrics. Reinforcing fabrics include those having complex architectures, including two or three-dimensional braided, knitted, woven, and filament wound. The curable composition is capable of permeating such complex reinforcing structures. The reinforcing structure can include fibers of materials known for the reinforcement of plastics material, for example fibers of carbon, glass, metal, and aromatic polyamides. Exemplary reinforcing structures are described, for example, in Anonymous (Hexcel Corporation), "Prepreg Technology", March 2005, Publication No. FGU 017b; Anonymous (Hexcel Corporation), "Advanced Fibre Reinforced Matrix Products for Direct Processes", June 2005, Publication No. ITA 272; and Bob Griffiths, "Farnborough Airshow Report 2006", CompositesWorld.com, September 2006. The weight and thickness of the reinforcing structure are chosen according to the intended use of the composite using criteria known to those skilled in the production of fiber reinforced resin composites. The reinforced structure can contain various finishes suitable for the epoxy matrix.

The method of forming the composite includes partially curing the curable epoxy composition after the reinforcing structure has been impregnated therewith. Partial curing is curing sufficient to reduce or eliminate the wetness and tackiness of the curable epoxy composition but not so great as to fully cure the composition. The resin in a prepreg is customarily in the partially cured state, and those skilled in the thermoset arts, and particularly the reinforced composite arts, understand the concept of partial curing and how to determine conditions to partially cure a resin without undue experimentation. References herein to properties of the "cured composition" refer to a composition that is substantially fully cured. For example, the resin in a laminate formed from prepregs is typically substantially fully cured. One skilled in the thermoset arts can determine whether a sample is partially cured or substantially fully cured without undue experimentation. For example, one can analyze a sample by differential scanning calorimetry to look for an exotherm indicative of additional curing occurring during the analysis. A sample that is partially cured will exhibit an exotherm. A sample that is substantially fully cured will exhibit little or no exotherm

Commercial-scale methods of forming composites are known in the art, and the curable compositions described herein are adaptable to existing processes and equipment. For example, prepregs are often produced on treaters. The main components of a treater include feeder rollers, a resin impregnation tank, a treater oven, and receiver rollers. The reinforcing structure (E-glass, for example) is usually rolled into a large spool. The spool is then put on the feeder rollers that turn and slowly roll out the reinforcing structure. The reinforcing structure then moves through the resin impregnation tank, which contains the curable composition. The varnish impregnates the reinforcing structure. After emerging from the tank, the coated reinforcing structure moves upward through the vertical treater oven, which is typically at a temperature of 175 to 200°C, and the solvent of the varnish is evaporated. The resin begins to polymerize at this time. When the composite comes out of the tower it is sufficiently cured so that the web is not wet or tacky. The cure process, however, is stopped short of completion so that additional curing can occur when laminate is made. The web then rolls the prepreg onto a receiver roll.

While the above-described curing methods rely on thermal curing, it is also possible to effect curing with radiation, including ultraviolet light and electron beams. Combinations of thermal curing and radiation curing can also be used.

Processes for preparing the articles and materials include those generally known to the art for the processing of thermosetting resins. Such processes have been described in the literature as in, for example, Engineered Materials Handbook, Volume 1, Composites, ASM International Metals Park, Ohio, copyright 1987 Cyril A. Dostal Senior Ed, pp. 105-168 and 497-533, and "Polyesters and Their Applications" by Bjorksten Research Laboratories, Johan Bjorksten (pres.) Henry Tovey (Ch. Lit. Ass.), Betty Harker (Ad. Ass.), James Henning (Ad. Ass.), Reinhold Publishing Corporation, New York, 1956. Processing techniques include resin transfer molding; sheet molding; bulk molding; pultrusion; injection molding, including reaction injection molding (RIM); atmospheric pressure molding (APM); casting, including centrifugal and static casting open mold casting; lamination including wet or dry lay-up and spray lay up; also included are contact molding, including cylindrical contact molding; compression molding; including vacuum assisted resin transfer molding and chemically assisted resin transfer molding; matched tool molding; autoclave curing; thermal curing in air; vacuum bagging; pultrusion; Seeman's Composite Resin Infusion Manufacturing Processing (SCRIMP); open molding, continuous combination of resin and glass; and filament winding, including cylindrical filament winding. For example, articles can be prepared from the disclosed curable epoxy compositions via a resin transfer molding process.

This disclosure is further illustrated by the following examples, which are nonlimiting.

### EXAMPLES

Materials used in the examples are described in Table 1.

**Table 1**

| Component | Description | Source |
|---|---|---|
| BPA-DGE | Diglycidyl ether of bisphenol A | Sigma Aldrich |
| BPA-DA | Bisphenol A dianhydride | SABIC |
| PMDA | Pyromellitic dianhydride | Sigma-Aldrich |
| 2,4-EMI | 2-ethyl-4-methylimidazole | Sigma-Aldrich |
| MHHPA | Hexahydro-4-methylphthalic anhydride | TCI Chemicals |
| MTHPA | Tetrahydro-4-methylphthalic anhydride | TCI Chemicals |

### Example 1

BPA-DGE, MHHPA, and BPA-DA were combined at an anhydride to epoxy (A/E) ratio of 0.8:1 and an MHHPA to BPA-DA anhydride equivalent mole ratio of 3:1. The reaction mixture is mixed well at 23°C and heated to 125°C for 3 minutes to afford a homogenous mixture. The mixture was then cooled down to 23°C and 1 wt% of 2,4-EMI was added. The resulting combination was heated to 110°C for 3 minutes and was then poured into a preheated mold (135°C) and cured in the mold at 150°C for 30 minutes, 175°C for 30 minutes, 200°C for 30 minutes, and 220°C for 90 minutes to provide a rigid and clear casting.

### Example 2

The same procedure as Example 1 was followed, except the MHHPA to BPA-DA anhydride equivalent mole ratio was 1:1.

### Comparative Example 1

BPA-DGE and MHHPA were combined at an anhydride to epoxy (A/E) ratio of 0.8:1 at 23°C with mixing. 2,4-EMI (1 wt%) was then added, and the resulting combination was heated to 90°C and then poured into a preheated mold (130°C). Curing was performed in the mold at 150°C for 30 minutes, 175°C for 30 minutes, 200°C for 30 minutes, and 220°C for 90 minutes to provide a rigid and clear casting.

### Example 3

BPA-DGE, MTHPA, and BPA-DA were combined at an anhydride to epoxy (A/E) ratio of 0.8:1 and the MTHPA to BPA-DA anhydride equivalent mole ratio was 9:1. The reaction mixture is mixed at 23°C and heated to 125°C for 3 minutes to afford a homogenous mixture. The mixture was then cooled down to 23°C and 1 wt% of 2,4-EMI was added. The resulting combination was heated to 110°C for 3 minutes and was then poured into a preheated mold (135°C) and cured in the mold at 80°C for 30 minutes, 120°C for 30 minutes, 150°C for 30 minutes, and 180°C for 60 minutes to provide a rigid and clear casting.

### Example 4

The same procedure as Example 3 was followed, except the MTHPA to BPA-DA anhydride equivalent mole ratio was 8:2.

### Example 5

The same procedure as Example 3 was followed, except the MTHPA to BPA-DA anhydride equivalent mole ratio was 7:3.

### Comparative Example 2

BPA-DGE and MTHPA were combined at an anhydride to epoxy (A/E) ratio of 0.8:1 at 23°C with mixing. 2,4-EMI (1 wt%) was then added, and the resulting combination was heated to 90°C and then poured into a preheated mold (130°C). Curing was performed in the mold at 80°C for 30 minutes, 120°C for 30 minutes, 150°C for 30 minutes, and 180°C for 60 minutes to provide a rigid and clear casting.

### Comparative Example 3

The same procedure as Example 3 was followed, except PMDA is used instead of BPA-DA.

### Comparative Example 4

The same procedure as Example 4 was followed, except PMDA is used instead of BPA-DA.

### Comparative Example 5

The same procedure as Example 5 was followed, except PMDA is used instead of BPA-DA.

### Sample Analysis

The glass transition temperature (T_{g}) was determined by dynamic mechanical analysis (DMA). Sample bars were prepared (40 mm length, 4 mm width, and 6 mm thickness) and analyzed at -40 to 300°C with a temperature ramp of 3°C/min and at a frequency of 6.283 radians per second.

Dynamic viscosity was determined using an Anton Paar MCR-702 parallel plate viscometer. Samples were analyzed at a fixed strain amplitude of 5% at an angular frequency of 10 radians per second (rad/s). Dynamic viscosity is reported as milliPascal-seconds (mPa· s).

The enthalpy of the curing reaction and peak temperature were obtained by differential scanning calorimetry (DSC) on a Discovery DSC from TA Instruments. Samples were analyzed at 23 to 300°C with a heating rate of 20°C/minute under a nitrogen atmosphere.

Thermo-gravimetric analysis (TGA) was used to evaluate thermal stability using a TGA Q5000 from TA Instruments. Samples were analyzed at 23 to 800°C with a heating rate of 10 °C/minute in nitrogen media with a flow rate of 50 ml per minute.

The coefficient of thermal expansion (CTE) was determined using a TMA Q400 machine on 6 mm long, 4 mm wide and 6 mm thick sample bars. CTE value is reported as part per million per degree Kelvin (ppm/K).

Table 1 shows the compositions, A/E ratio, and T_{g} (°C) for Examples 1 and 2 and Comparative Example 1.

**Table 2**

| | MHHPA (Anhydride Eq. Mole %) | BPA-DA (Anhydride Eq. Mole %) | A/E Ratio | Tg (°C) |
|---|---|---|---|---|
| Comparative Example 1 | 100 | 0 | 0.8 | 160 |
| Example 1 | 75 | 25 | 0.8 | 184 |
| Example 2 | 50 | 50 | 0.8 | 215 |

As shown in Table 2, increasing the BPA-DA content of the MHHPA-containing curable composition provided a cured epoxy resin having a greater T_{g}. A single T_{g} peak was observed in the traces for Examples 1 and 2 by DMA analysis.

**Table 3**

| | MTHPA (Anhydride Eq. Mole %) | Aromatic Dianhydride | Aromatic Dianhydride (Anhydride Eq. Mole %) | A/E Ratio | Tg (°C) |
|---|---|---|---|---|---|
| Comparative Example 2 | 100 | None | 0 | 0.8 | 145 |
| Example 3 | 10 | BPA-DA | 90 | 0.8 | 164 |
| Example 4 | 20 | BPA-DA | 80 | 0.8 | 173 |
| Example 5 | 30 | BPA-DA | 70 | 0.8 | 182 |
| Comparative Example 3 | 10 | PMDA | 90 | 0.8 | 157 |
| Comparative Example 4 | 20 | PMDA | 80 | 0.8 | 160 |
| Comparative Example 5 | 30 | PMDA | 70 | 0.8 | 160 |

As shown in Table 3, increasing the BPA-DA content in MTHPA-containing curable compositions provided a cured epoxy resin having a greater T_{g}. A single T_{g} peak was observed in the traces for Examples 3, 4, and 5 by DMA. These results indicate that BPA-DA can effectively be used as a part of the hardener composition to afford thermoset resins with high heat properties. Comparative Examples 3, 4, and 5, which included PMDA instead of BPA-DA, had lower T_{g} at the same anhydride equivalent mole ratios. BPA-DA is therefore more effective than PMDA in affording a thermoset resin with high heat properties.

Table 4 shows the compositions, coefficient of thermal expansion (CTE) at temperatures below and above the T_{g} for Examples 1 and 2 and Comparative Example 1.

**Table 4**

| | MHHPA (Anhydride Eq. Mole %) | BPA-DA (Anhydride Eq. Mole %) | CTE (ppm/K) below Tg | CTE (ppm/K) above Tg |
|---|---|---|---|---|
| Comparative Example 1 | 100 | 0 | 52.7 | 171.3 |
| Example 1 | 75 | 25 | 54.5 | 159.2 |
| Example 2 | 50 | 50 | 54 | 114.5 |

As shown in Table 4, addition of BPA-DA slightly increases CTE below the T_{g} and decreases CTE above the Tg. Examples 1 and 2 are favorable for use in electronics, for example semiconductor encapsulation where lower CTE at higher temperatures is desirable.

Table 5 shows the dynamic viscosity at 25°C and 90°C for Examples 3 to 5 and Comparative Example 2.

**Table 5**

| | MTHPA (Anhydride Eq. Mole %) | BPA-DA (Anhydride Eq. Mole %) | A/E ratio | Viscosity @25°C (mPa·s) | Viscosity @90°C (mPa·s) |
|---|---|---|---|---|---|
| Comparative Example 2 | 100 | 0 | 0.8 | 400 | 38 |
| Example 3 | 90 | 10 | 0.8 | 1100 | 42 |
| Example 4 | 80 | 20 | 0.8 | 3000 | 48 |
| Example 5 | 70 | 30 | 0.8 | 8000 | 80 |

As shown in Table 5, dynamic viscosity increases as a function of the concentration of BPA-DA at 25°C, but not at 90°C. Examples 3 to 5 had dynamic viscosities of less than 10,000 mPa·s at 25°C, which is desirable for a liquid curing agent system.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group. Also as used herein, the term "combination" is inclusive of blends, mixtures, alloys, reaction products, and the like.

The term "hydrocarbyl" and "hydrocarbon" refer to a monovalent group containing carbon and hydrogen, optionally with 1 to 3 heteroatoms such as a halogen, N, O, S, Si, P, or a combination thereof. Exemplary hydrocarbyls include alkyl, cycloalkyl, alkenyl, cycloalkenyl, aryl, alkylaryl, or arylalkyl as defined below. The term "hydrocarbylene" refers to a divalent hydrocarbyl. Hydrocarbylene can be alkylene, cycloalkylene, arylene, alkylarylene, or arylalkylene as defined below. The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ-, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentenyl and cyclohexenyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group. "Amino" means a radical of the formula -NRR' wherein R and R' are independently hydrogen or a C₁₋₃₀ hydrocarbyl, for example a C₁₋₂₀ alkyl group or a C₆₋₃₀ aryl group. "Halogen" or "halogen atom" means a fluorine, chlorine, bromine, or iodine atom. The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. The suffix "oxy" indicates that the open valence of the group is on an oxygen atom and the suffix "thio" indicates that the open valence of the group is on a sulfur atom.

Unless substituents are otherwise specifically indicated, each of the foregoing groups can be unsubstituted or substituted, provided that the normal valence of the substituted atom is not exceeded and provided that the substitution does not significantly adversely affect synthesis, stability, or use of the compound. "Substituted" means that the compound, group, or atom is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g., benzyl), C₇₋₁₂ alkylarylene (e.g, toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂aryl), or tosyl (CH₃C₆H₄SO₂). When a compound is substituted, the indicated number of carbon atoms is the total number of carbon atoms in the compound or group, excluding those of any substituents. For example, the group -CH₂CH₂CN is a C₂ alkyl group substituted with a cyano substituent.

## Claims

1. A curable epoxy composition, comprising:
an epoxy resin composition comprising one or more epoxy resins, each independently having an epoxy equivalent weight of at least 2;
a hardener composition comprising
an aromatic dianhydride curing agent of the formula 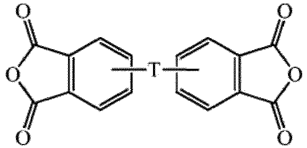 wherein T is -O-, -S-, -SO₂-, -SO-, -C_{y}H_{2y}- wherein y is an integer from 1 to 5 or a halogenated derivative thereof, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination thereof, and the aromatic dianhydride has a melting point of 220°C or less; and
at least one additional anhydride curing agent different from the aromatic dianhydride curing agent; and
0.1 to 5 weight percent of a heterocyclic accelerator, based on the total weight of the epoxy resin composition and the hardener composition, wherein the heterocyclic accelerator comprises a substituted or unsubstituted C₃₋₆ heterocycle comprising 1 to 4 ring heteroatoms, wherein each heteroatom is independently the same or different, and is nitrogen, oxygen, phosphorus, silicon, or sulfur, preferably nitrogen, oxygen, or sulfur, more preferably nitrogen.

2. The curable epoxy composition of claim 1, wherein an anhydride to epoxy (A/E) ratio is 0.1:1 to 2.0:1, preferably 0.4:1 to 1.2:1, more preferably 0.6:1 to 1:1.

3. The curable epoxy composition of any one or more of the preceding claims, wherein the epoxy resin composition comprises a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or a combination thereof.

4. The curable epoxy composition of any one or more of the preceding claims, wherein T is -O- or a group of the formula -O-Z-O- wherein Z is of the formula 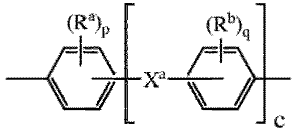 wherein
R^{a} and R^{b} are each independently the same or different, and are a halogen atom or a monovalent C₁₋₆ alkyl group,
X^{a} is a single bond, -O-, -S-, -S(O)-, -S(O)₂-, -C(O)-, or a C₁₋₁₈ organic bridging group, and
p, q, and c are each independently integers of 0 to 4.

5. The curable epoxy composition of claim 4, wherein Z is a divalent group of formula 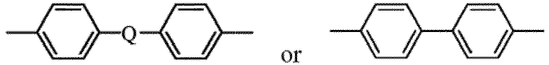 wherein Q is -O-, -S-, -C(O)-, -SO₂-, -SO-, -P(R^{c})(=O)- wherein R^{c} is a C₁₋₈ alkyl or C₆₋₁₂ aryl, or -C_{y}H_{2y}- wherein y is an integer from 1 to 5 or a halogenated derivative thereof, preferably wherein Q is 2,2-isopropylidene.

6. The curable epoxy composition of any one or more of the preceding claims, wherein the at least one additional anhydride curing agent comprises benzophenone tetracarboxylic anhydride, a (C₁₋₆ alkyl)styrene-maleic anhydride copolymer, chlorendic anhydride, dodecenyl succinic anhydride, hexahydrophthalic anhydride, hexahydro-4-methylphthalic anhydride, maleic anhydride, methylbutenyl tetrahydrophthalic anhydride, tetrahydro-4-methylphthalic anhydride, methylcyclohexene dicarboxylic anhydride, methylnadic anhydride, methyltetrahydrophthalic anhydride, nadic anhydride, phthalic anhydride, pyromellitic anhydride, succinic anhydride, trimellitic anhydride, or a combination thereof.

7. The curable epoxy composition of any one or more of the preceding claims, wherein the heterocyclic accelerator comprises a C₃₋₄ five-membered ring wherein the ring heteroatoms are one or two nitrogen atoms; preferably a C₃ five-membered ring wherein the ring heteroatoms are two nitrogen atoms.

8. The curable epoxy composition of any one or more of the preceding claims, wherein
the epoxy resin is bisphenol-A diglycidyl ether,
the aromatic dianhydride curing agent is bisphenol A dianhydride,
the at least one additional anhydride curing agent is hexahydro-4-methylphthalic anhydride, tetrahydro-4-methylphthalic anhydride, or a combination thereof, and
the heterocyclic accelerator is 1,2-dimethylimidazole, 1,3-dimethylimidazole, 2,4-dimethylimidazole, 2-ethyl-4-methylimidazole, or a combination thereof.

9. The curable epoxy composition of any one or more of the preceding claims, further comprising at least one of:
an additional cure accelerator different from the heterocyclic accelerator; or
an additive composition, preferably wherein the additive composition comprises a particulate filler, a fibrous filler, an antioxidant, a heat stabilizer, a light stabilizer, a ultraviolet light stabilizer, a ultraviolet light-absorbing compound, a near infrared light-absorbing compound, an infrared light-absorbing compound, a plasticizer, a lubricant, a release agent, a antistatic agent, an anti-fog agent, an antimicrobial agent, a colorant, a surface effect additive, a radiation stabilizer, a flame retardant, an anti-drip agent, a fragrance, an adhesion promoter, a flow enhancer, a coating additive, a polymer different from the one or more epoxy resins, or a combination thereof.

10. A method for the manufacture of the curable epoxy composition of any one or more of the preceding claims, the method comprising:
combining the epoxy resin composition and the hardener composition at a temperature of 100 to 200°C, preferably 120 to 190°C, more preferably 130 to 180°C, to provide a reaction mixture;
cooling the reaction mixture to less than 100°C; and
adding the heterocyclic accelerator to the reaction mixture to provide the curable epoxy composition.

11. The method of claim 10, wherein the reaction mixture is substantially free of solvent.

12. A thermoset epoxy composition comprising a cured product of the curable epoxy composition of any one or more of the preceding claims, preferably wherein the cured product has at least one of:
a glass transition temperature of greater than or equal to 170°C, preferably greater than or equal to 180°C, more preferably greater than or equal to 200°C; or
a total transmission of greater than 50%, preferably greater than 70%, more preferably greater than 90%; or
a dynamic viscosity of less than 10,000 megapascals per second at 25°C.

13. An article comprising the thermoset epoxy composition of claim 12, preferably wherein the article is in the form of a composite, a foam, a fiber, a layer, a coating, an encapsulant, an adhesive, a sealant, a component, a prepreg, a casing, or a combination thereof.

14. A method for the manufacture of a thermoset epoxy composition, the method comprising curing the curable epoxy composition of any one or more of the preceding claims, preferably wherein the curing is by compression molding, injection molding, transfer molding, pultrusion, resin casting, or a combination thereof.

15. The method of claim 14, wherein the curing comprises injecting the curable epoxy composition into a mold; and curing the injected epoxy composition at 150 to 250°C in the mold.

## Patentansprüche

1. Eine härtbare Epoxidzusammensetzung, die Folgendes umfasst:
eine Epoxidharzzusammensetzung, die ein oder mehrere Epoxidharze umfasst, die jeweils unabhängig ein EpoxidÄquivalentgewicht von mindestens 2 haben;
eine Härterzusammensetung, die Folgendes umfasst:
einen aromatischen Dianhydridhärter mit der Formel 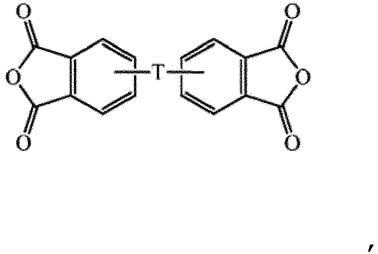 worin T -O-, -S-, -SO₂-, -SO-, -C_{y}H_{2y}- ist, worin y eine ganze Zahl von 1 bis 5 ist, oder ein halogenhaltiges Derivat davon, oder -O-Z-O-, worin Z ein aromatischer monozyklischer oder polyzyklischer C₆₋₂₄-Anteil ist, wahlweise substituiert mit 1 bis 6 C₁₋₈ Alkylgruppen, 1 bis 8 Halogenatomen oder einer Kombination davon, und das aromatische Dianhydrid einen Schmelzpunkt von 220°C oder weniger hat; und
mindestens einen zusätzlichen Anhydridhärter, der sich von dem aromatischen Dianhydridhärter unterscheidet; und
0,1 bis 5 Gewichtsprozent eines heterozyklischen Beschleunigers, basierend auf dem Gesamtgewicht der Epoxidharzzusammensetzung und der Härterzusammensetzung, wobei der heterozyklische Beschleuniger einen substituierten oder unsubstituierten C₃₋₆-Heterozyklus umfasst, der 1 bis 4 Ringheteroatome umfasst, wobei jedes Heteroatom unabhängig gleich oder verschieden ist und Stickstoff, Sauerstoff, Phosphor, Silizium oder Schwefel ist, vorzugsweise Stickstoff, Sauerstoff oder Schwefel, stärker bevorzugt Stickstoff.

2. Die härtbare Epoxidzusammensetzung gemäß Anspruch 1, worin ein Verhältnis von Anhydrid zu Epoxid (A/E) 0,1:1 bis 2,0:1, vorzugsweise 0,4:1 bis 1,2:1, stärker bevorzugt 0,6:1 bis 1:1, beträgt.

3. Die härtbare Epoxidzusammensetzung gemäß einem beliebigen oder mehreren der obigen Ansprüche, wobei die Epoxidharzzusammensetzung ein Bisphenol A Epoxidharz, ein Triglycidyl-substituiertes Epoxidharz, ein Tetraglycidylsubstituiertes Epoxidharz, ein Bisphenol F Epoxidharz, ein Phenol-Novolak-Epoxidharz, ein Cresol-Novolak-Epoxidharz, ein cycloaliphatisches Diglycidylester-Epoxidharz, ein cycloaliphatisches Epoxidharz, das eine Ringepoxidgruppe umfasst, ein Epoxidharz, das einen Spiro-Ring enthält, ein Hydantoin-Epoxidharz oder eine Kombination davon umfasst.

4. Die härtbare Epoxidzusammensetzung gemäß einem beliebigen oder mehreren der obigen Ansprüche, worin T -O- oder eine Gruppe mit der Formel -O-Z-O- ist, worin Z folgende Formel hat: 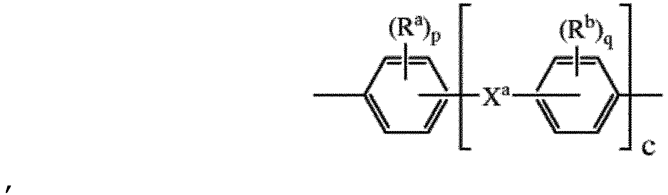 worin
R^{a} und R^{b} jeweils unabhängig gleich oder verschieden sind und ein Halogenatom oder eine einwertige C₁₋₆ Alkylgruppe sind,
X^{a} eine Einfachbingung, -O-, -S-, -S(O)-, -S(O)₂-, -C(O)- oder eine organische C₁₋₁₈ Brückengruppe ist,
und
p, q und c jeweils unabhängig ganze Zahlen von 0 bis 4 sind.

5. Die härtbare Epoxidzusammensetzung gemäß Anspruch 4, worin Z eine zweiwertige Gruppe mit der Formel 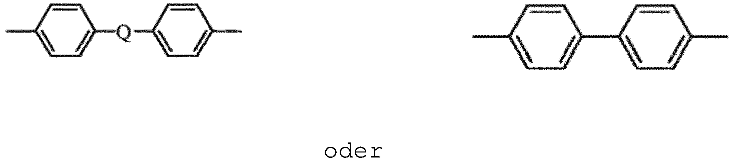 ist, worin Q -O-, -S-, -C(O)-, -SO₂-, -SO-, -P(R^{c})(=O)- ist, worin R^{c} ein C₁₋₈ Alkyl oder C₆₋₁₂ Aryl oder -C_{y}H_{2y}- ist, worin y eine ganze Zahl von 1 bis 5 ist, oder ein halogenhaltiges Derivat davon, worin Q vorzugsweise 2,2-Isopropyliden ist.

6. Die härtbare Epoxidzusammensetzung gemäß einem beliebigen oder mehreren der obigen Ansprüche, wobei der mindestens eine zusätzliche Anhydridhärter Folgendes umfasst: Benzophenontetracarbonsäureanhydrid, ein (C₁₋₆ Alkyl)styren-maleinsäureanhydrid-Copolymer, 1,4,5,6,7,7-Hexachlorbicyclo[2.2.1]-hept-5-en-2,3-dicarbonsäure, Dodecenylbernsteinsäureanhydrid, Hexahydrophthalsäureanhydrid, Hexahydro-4-methylphthalsäureanhydrid, Maleinsäureanhydrid, Methylbutenyltetrahydrophthalsäureanhydrid, Tetrahydro-4-methylphthalsäureanhydrid, Methylcyclohexendicarbonsäureanhydrid, Methyl-5-norbornen-2,3-dicarbonsäureanhydrid, Methyltetrahydrophthalsäureanhydrid, Nadicanhydrid, Phthalsäureanhydrid, Pyromellitsäureanhydrid, Bernsteinsäureanhydrid, Trimellitsäureanhydrid, oder eine Kombination davon.

7. Die härtbare Epoxidzusammensetzung gemäß einem beliebigen oder mehreren der obigen Ansprüche, wobei der heterozyklische Beschleuniger einen C₃₋₄ fünfgliedrigen Ring umfasst, wobei die Ringheteroatome ein oder zwei Stickstoffatome sind, vorzugsweise einen C₃ fünfgliedrigen Ring, wobei die Ringheteroatome zwei Stickstoffatome sind.

8. Die härtbare Epoxidzusammensetzung gemäß einem beliebigen oder mehreren der obigen Ansprüche, worin
das Epoxidharz Bisphenol-A-diglycidylether ist,
der aromatische Dianhydridhärter Bisphenol-A-dianhydrid ist,
der mindestens eine zusätzliche Anhydridhärter Hexahydro-4-methylphthalsäureanhydrid, Tetrahydro-4-methylphthalsäureanhydrid oder eine Kombination davon ist, und
der heterozyklische Beschleuniger 1,2-Dimethylimidazol, 1,3-Dimethylimidazol, 2,4-Dimethylimidazol, 2-Ethyl-4-methylimidazol oder eine Kombination davon ist.

9. Die härtbare Epoxidzusammensetzung gemäß einem beliebigen oder mehreren der obigen Ansprüche, die weiter mindestens eines von Folgendem umfasst:
einem zusätzlichen Härtungsbeschleuniger, der sich vom heterozyklischen Beschleuniger unterscheidet; oder
eine additive Zusammensetzung, wobei die additive Zusammensetzung vorzugsweise einen Partikelfüllstoff, einen faserigen Füllstoff, ein Antioxidans, einen Wärmestabilisator, einen Lichtstabilisator, einen UV-Lichtstabilisator, eine UV-Licht absorbierende Verbindung, eine Verbindung zum Absorbieren von Licht im nahen Infrarotbereich, eine Infrarotlichtabsorbierende Verbindung, einen Weichmacher, ein Schmiermittel, ein Trennmittel, ein Antistatikum, ein Antitrübungsmittel, ein antimikrobielles Mittel, einen Farbstoff, einen Oberflächeneffekt-Zusatzstoff, einen Strahlungsstabilisator, ein Flammverzögerungsmittel, ein Antitropfmittel, einen Duftstoff, einen Haftvermittler, eine Rieselhilfe, einen Beschichtungszusatzstoff, ein Polymer, das sich von dem einem oder den mehreren Epoxidharzen unterscheidet, oder eine Kombination davon umfasst.

10. Ein Verfahren zur Herstellung der härtbaren Epoxidzusammensetzung gemäß einem beliebigen oder mehreren der obigen Ansprüche, wobei das Verfahren Folgendes umfasst:
das Kombinieren der Epoxidharzzusammensetzung und der Härterzusammensetung bei einer Temperatur von 100 bis 200°C, vorzugsweise 120 bis 190°C, stärker bevorzugt 130 bis 180°C, um eine Reaktionsmischung zu bilden;
das Abkühlen der Reaktionsmischung auf weniger als 100°C; und
das Hinzufügen des heterozyklischen Beschleunigers zur Reaktionsmischung, um die härtbare Epoxidzusammensetzung bereitzustellen.

11. Das Verfahren gemäß Anspruch 10, wobei die Reaktionsmischung im Wesentlichen frei von Lösungsmittel ist.

12. Eine wärmeausgehärtete Epoxidzusammensetzung, die ein gehärtetes Produkt der härtbaren Epoxidzusammensetzung gemäß einem oder mehreren der obigen Ansprüche umfasst, wobei das gehärtete Produkt mindestens eines von Folgendem hat:
eine Glasübergangstemperatur von mindestens 170°C, vorzugsweise mindestens 180°C, stärker bevorzugt mindestens 200°C; oder
eine Gesamtdurchlässigkeit von mehr als 50%, vorzugsweise mehr als 70%, stärker bevorzugt mehr als 90%; oder
eine Viskosität von weniger als 10.000 Megapascal pro Sekunde bei 25°C.

13. Ein Gegenstand, der die wärmeausgehärtete Epoxidzusammensetzung gemäß Anspruch 12 umfasst, wobei der Gegenstand vorzugsweise in Form eines Verbundstoffs, eines Schaums, einer Faser, einer Schicht, einer Beschichtung, eines Verkapselungsmittels, eines Klebstoffs, eines Dichtungsmittel, einer Komponente, eines Prepregs, eines Gehäuses oder einer Kombination davon vorliegt.

14. Ein Verfahren zur Herstellung einer wärmeausgehärteten Epoxidzusammensetzung, wobei das Verfahren das Härten der härtbaren Epoxidzusammensetzung gemäß einem oder mehreren der obigen Ansprüche umfasst, wobei das Härten vorzugsweise durch Formpressen, Spritzgießen, Spritzpressen, Zieh-Strangpressen, Harzgießen oder eine Kombination davon stattfindet.

15. Das Verfahren gemäß Anspruch 14, wobei das Härten das Einspritzen der härtbaren Epoxidzusammensetzung in eine Form und das Härten der eingespritzen Epoxidzusammensetzung bei 150 bis 250°C in der Form umfasst.

## Revendications

1. Composition époxy durcissable comprenant :
une composition de résine époxy comprenant une ou plusieurs résines époxy, chacune ayant indépendamment un poids équivalent époxy d'au moins 2 ;
une composition de durcisseur comprenant
un agent durcisseur dianhydride aromatique de formule 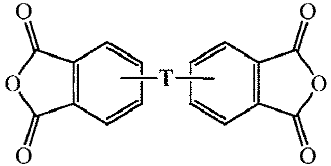 dans laquelle T est -O-, -S-, -SO₂-, -SO-, -C_{y}H_{2y}-, où y est un entier de 1 à 5, ou un dérivé halogéné de celui-ci, ou - O-Z-O- où Z est un fragment monocyclique ou polycyclique aromatique en C₆ à C₂₄ éventuellement substitué par 1 à 6 groupes alkyle en C₁ à C₈, 1 à 8 atomes d'halogène, ou une de leurs combinaisons, et le dianhydride aromatique ayant un point de fusion de 220°C ou moins ; et
au moins un agent durcisseur anhydride additionnel différent de l'agent durcisseur dianhydride aromatique ; et
0,1 à 5 % en poids d'un accélérateur hétérocyclique, par rapport au poids total de la composition de résine époxy et de la composition de durcisseur, lequel accélérateur hétérocyclique comprend un hétérocycle en C₃ à C₆ substitué ou non substitué comprenant 1 à 4 hétéroatomes de cycle, dont chaque hétéroatome est indépendamment identique ou différent et est l'azote, l'oxygène, le phosphore, le silicium ou le soufre, de préférence l'azote, l'oxygène ou le soufre, mieux encore l'azote.

2. Composition époxy durcissable selon la revendication 1, dans lequel le rapport de l'anhydride à l'époxy (A/E) est de 0,1 : 1 à 2,0 : 1, de préférence de 0,4 : 1 à 1,2 : 1, mieux encore de 0,6 : 1 à 1 : 1.

3. Composition époxy durcissable selon l'une quelconque ou plusieurs des revendications précédentes, dans laquelle la composition de résine époxy comprend une résine époxy de bisphénol A, une résine époxy à substitution triglycidyle, une résine époxy à substitution tétraglycidyle, une résine époxy de bisphénol F, une résine époxy de phénol-novolaque, une résine époxy de crésol-novolaque, une résine époxy d'ester diglycidylique cycloaliphatique, une résine époxy cycloaliphatique comprenant un groupe époxy de cycle, une résine époxy contenant un cycle spiro, une résine époxy d'hydantoïne, ou une de leurs combinaisons.

4. Composition époxy durcissable selon l'une quelconque ou plusieurs des revendications précédentes, dans laquelle T est -O- ou un groupe de formule -O-Z-O- dans laquelle Z est de formule 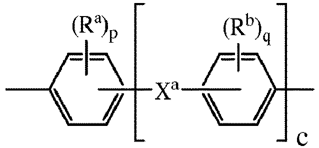 dans laquelle
chacun de R^{a} et R^{b} est indépendamment identique ou différent et est un atome d'halogène ou un groupe alkyle en C₁ à C₆ monovalent,
X^{a} est une liaison simple, -O-, -S-, -S(O)-, -S(O)₂-, - C(O)-, ou un groupe pontant organique en C₁ à C₁₈, et
chacun de p, q et c est indépendamment un entier de 0 à 4.

5. Composition époxy durcissable selon la revendication 4, dans laquelle Z est un groupe divalent de formule 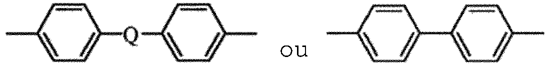 dans laquelle Q est -O-, -S-, -C(O)-, -SO₂-, -SO-, -P(R^{c})(=O)- où R^{c} est un alkyle en C₁ à C₈ ou aryle en C₆ à C₁₂, ou -C_{y}H_{2y}- où y est un entier de 1 à 5 ou un dérivé halogéné de celui-ci, de préférence où Q est le 2,2-isopropylidène.

6. Composition époxy durcissable selon l'une quelconque ou plusieurs des revendications précédentes, dans laquelle l'au moins un agent durcisseur anhydride additionnel comprend l'anhydride benzophénone-tétracarboxylique, un copolymère de (alkyle en C₁ à C₆)styrène et d'anhydride maléique, l'anhydride chlorendique, l'anhydride dodécénylsuccinique, l'anhydride hexahydrophtalique, l'anhydride hexahydro-4-méthylphtalique, l'anhydride maléique, l'anhydride méthylbutényl-tétrahydrophtalique, l'anhydride tétrahydro-4-méthylphtalique, l'anhydride méthylcyclohexène-dicarboxylique, l'anhydride méthylnadique, l'anhydride méthyltétrahydrophtalique, l'anhydride nadique, l'anhydride phtalique, l'anhydride pyromellitique, l'anhydride succinique, l'anhydride trimellitique, ou une de leurs combinaisons.

7. Composition époxy durcissable selon l'une quelconque ou plusieurs des revendications précédentes, dans laquelle l'accélérateur hétérocyclique comprend un cycle en C₃ à C₄ à cinq chaînons dont les hétéroatomes de cycle sont un ou deux atomes d'azote ; de préférence un cycle en C₃ à cinq chaînons dont les hétéroatomes de cycle sont deux atomes d'azote.

8. Composition époxy durcissable selon l'une quelconque ou plusieurs des revendications précédentes, dans laquelle
la résine époxy est l'éther diglycidylique de bisphénol A,
l'agent durcisseur dianhydride aromatique est le dianhydride de bisphénol A,
l'au moins un agent durcisseur anhydride additionnel est l'anhydride hexahydro-4-méthylphtalique, l'anhydride tétrahydro-4-méthylphtalique, ou une de leurs combinaisons, et
l'accélérateur hétérocyclique est le 1,2-diméthylimidazole, le 1,3-diméthylimidazole, le 2,4-diméthylimidazole, le 2-éthyl-4-méthylimidazole, ou une de leurs combinaisons.

9. Composition époxy durcissable selon l'une quelconque ou plusieurs des revendications précédentes, comprenant en outre au moins l'un parmi :
un accélérateur de durcissement additionnel différent de l'accélérateur hétérocyclique ; et
une composition d'additif, de préférence laquelle composition d'additif comprend une charge particulaire, une charge fibreuse, un antioxydant, un stabilisant à la chaleur, un stabilisant à la lumière, un stabilisant aux ultraviolets, un composé absorbant les ultraviolets, un composé absorbant les proches infrarouges, un composé absorbant les infrarouges, un plastifiant, un lubrifiant, un agent de démoulage, un agent antistatique, un agent antivoile, un agent antimicrobien, un colorant, un additif à effet de surface, un stabilisant aux radiations, un retardateur d'inflammation, un agent anti-goutte, un parfum, un promoteur d'adhérence, un amplificateur de fluidité, un additif de revêtement, un polymère différent de la ou des résines époxy, ou une de leurs combinaisons.

10. Procédé pour la fabrication de la composition époxy durcissable selon l'une quelconque ou plusieurs des revendications précédentes, le procédé comprenant :
la combinaison de la composition de résine époxy et de la composition de durcisseur à une température de 100 à 200°C, de préférence de 120 à 190°C, mieux encore de 130 à 180°C, pour former un mélange réactionnel ;
le refroidissement du mélange réactionnel à moins de 100°C ; et
l'addition de l'accélérateur hétérocyclique au mélange réactionnel pour former la composition époxy durcissable.

11. Procédé selon la revendication 10, dans lequel le mélange réactionnel est pratiquement exempt de solvant.

12. Composition époxy thermodurcie comprenant un produit durci de la composition époxy durcissable selon l'une quelconque ou plusieurs des revendications précédentes, de préférence dans laquelle le produit durci a au moins l'une parmi :
une température de transition vitreuse supérieure ou égale à 170°C, de préférence supérieure ou égale à 180°C, mieux encore supérieure ou égale à 200°C ; et
une transmission totale supérieure à 50 %, de préférence supérieure à 70 %, mieux encore supérieure à 90 % ; et
une viscosité dynamique inférieure à 10 000 mégapascals par seconde à 25°C.

13. Article comprenant la composition époxy thermodurcie selon la revendication 12, de préférence lequel article est sous la forme d'un composite, d'une mousse, d'une fibre, d'une couche, d'un revêtement, d'un produit d'encapsulation, d'un adhésif, d'un produit d'étanchéité, d'un composant, d'un préimprégné, d'une enveloppe, ou d'une de leurs combinaisons.

14. Procédé pour la fabrication d'une composition époxy thermodurcie, le procédé comprenant le durcissement de la composition époxy durcissable selon l'une quelconque ou plusieurs des revendications précédentes, de préférence dans lequel le durcissement est effectué par moulage par compression, moulage par injection, moulage par transfert, pultrusion, coulée de résine, ou une de leurs combinaisons.

15. Procédé selon la revendication 14, dans lequel le durcissement comprend l'injection de la composition époxy durcissable dans un moule ; et le durcissement de la composition époxy injectée à une température de 150 à 250°C dans le moule.
